# EUROPEAN PATENT SPECIFICATION

(11) **EP 3 996 452 B1**
(45) Date of publication and mention of the grant of the patent: **04.09.2024**
(21) Application number: 20840894.8
(22) Date of filing: 08.07.2020
(51) Int. Cl.: H04W 72/20, H04W 92/18

(54) **METHOD AND DEVICE FOR PRIORITY DETERMINATION IN NR V2X**
VERFAHREN UND VORRICHTUNG ZUR PRIORITÄTSBESTIMMUNG IN NR V2X
PROCÉDÉ ET DISPOSITIF DE DÉTERMINATION DE PRIORITÉ EN NR V2X

(30) Priority: 16.07.2019 KR 20190085910
(43) Date of publication of application: 11.05.2022
(73) Proprietor: LG Electronics Inc., SEOUL 07336 (KR)
(72) Inventor: LEE, Jongyoul, Seoul 06772 (KR); SEO, Hanbyul, Seoul 06772 (KR); PARK, Giwon, Seoul 06772 (KR)
(74) Representative: Mooser, Sebastian Thomas
(86) International application number: PCT/KR2020/008878
(87) International publication number: WO 2021/010644

(56) References cited:
- WO-A1-2018/082571
- WO-A1-2018/175577
- MEDIATEK INC: "Prioritization of UL and SL transmission", vol. RAN WG2, no. Reno, US; 20190513 - 20190517, 13 May 2019 (2019-05-13), XP051729804, Retrieved from the Internet <URL:http://www.3gpp.org/ftp/Meetings%5F3GPP%5FSYNC/RAN2/Docs/R2%2D1906337%2Ezip> [retrieved on 20190513]
- VIVO: "Uplink and Sidelink transmission prioritization in NR V2X", 3GPP DRAFT; R2-1905847_UPLINK AND SIDELINK TRANSMISSION PRIORITIZATION IN NR V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, US; 20190513 - 20190517, R2-1905847_Uplink and Sidelink transmission priori, 3 May 2019 (2019-05-03), Mobile Competence Centre ; 650, route des Lucioles ; F-06921 Sophia-Antipolis Cedex ; France, XP051710199
- ASUSTEK: "Discussion on UL/SL TX prioritization", 3GPP DRAFT; R2-1906541 DISCUSSION ON UL SL TX PRIORITIZATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, R2-1906541 Discussion on UL SL TX prioritization, 2 May 2019 (2019-05-02), Mobile Competence Centre ; 650, route des Lucioles ; F-06921 Sophia-Antipolis Cedex ; France, XP051710852
- CATT: "Prioritization of Uu and SL for NR V2X", 3GPP DRAFT; R2-1905803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, USA; 20190513 - 20190517, R2-1905803, 3 May 2019 (2019-05-03), Mobile Competence Centre ; 650, route des Lucioles ; F-06921 Sophia-Antipolis Cedex ; France, XP051710156
- OPPO (RAPPORTEUR): "Summary of [Offline#704] UL/SL prioritization", 3GPP DRAFT; R2-1908291 - SUMMARY OF [OFFLINE#704] UL_SL PRIORITIZATION_V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, US; 20190513 - 20190517, R2-1908291 - Summary of [Offline#704] UL_SL Priori, 18 May 2019 (2019-05-18), Mobile Competence Centre ; 650, route des Lucioles ; F-06921 Sophia-Antipolis Cedex ; France, XP051740435

## Description

### BACKGROUND OF THE DISCLOSURE

### Field of the disclosure

This disclosure relates to a wireless communication system.

### Related Art

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PCS interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

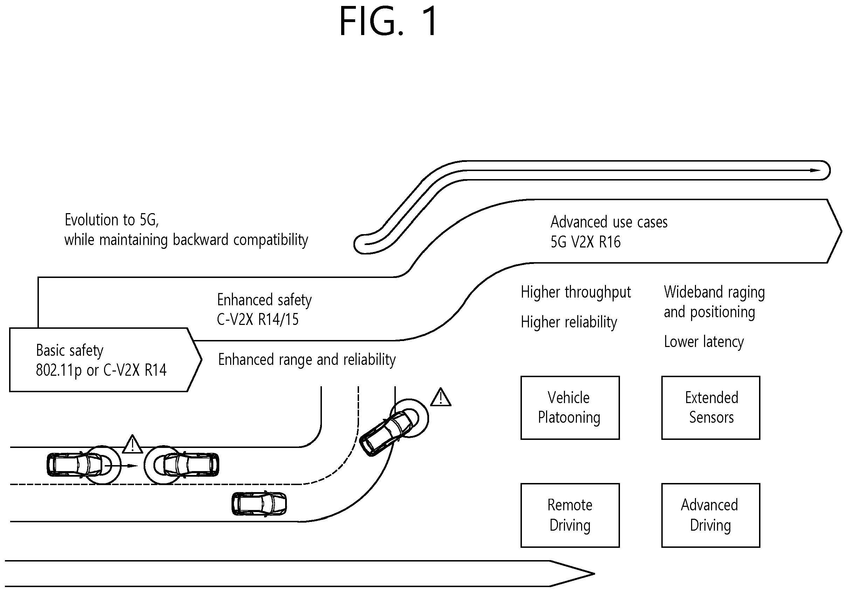

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a UE may transmit a periodic message type CAM and/or an event triggered message type DENM to another UE.

For example, the CAM may include dynamic state information of the vehicle such as direction and speed, static data of the vehicle such as a size, and basic vehicle information such as an exterior illumination state, route details, or the like. For example, the UE may broadcast the CAM, and latency of the CAM may be less than 100ms. For example, the UE may generate the DENM and transmit it to another UE in an unexpected situation such as a vehicle breakdown, accident, or the like. For example, all vehicles within a transmission range of the UE may receive the CAM and/or the DENM. In this case, the DENM may have a higher priority than the CAM.

Thereafter, regarding V2X communication, various V2X scenarios are proposed in NR. For example, the various V2X scenarios may include vehicle platooning, advanced driving, extended sensors, remote driving, or the like.

For example, based on the vehicle platooning, vehicles may move together by dynamically forming a group. For example, in order to perform platoon operations based on the vehicle platooning, the vehicles belonging to the group may receive periodic data from a leading vehicle. For example, the vehicles belonging to the group may decrease or increase an interval between the vehicles by using the periodic data.

For example, based on the advanced driving, the vehicle may be semi-automated or fully automated. For example, each vehicle may adjust trajectories or maneuvers, based on data obtained from a local sensor of a proximity vehicle and/or a proximity logical entity. In addition, for example, each vehicle may share driving intention with proximity vehicles.

For example, based on the extended sensors, raw data, processed data, or live video data obtained through the local sensors may be exchanged between a vehicle, a logical entity, a UE of pedestrians, and/or a V2X application server. Therefore, for example, the vehicle may recognize a more improved environment than an environment in which a self-sensor is used for detection.

For example, based on the remote driving, for a person who cannot drive or a remote vehicle in a dangerous environment, a remote driver or a V2X application may operate or control the remote vehicle. For example, if a route is predictable such as public transportation, cloud computing based driving may be used for the operation or control of the remote vehicle. In addition, for example, an access for a cloud-based back-end service platform may be considered for the remote driving.

Meanwhile, a scheme of specifying service requirements for various V2X scenarios such as vehicle platooning, advanced driving, extended sensors, remote driving, or the like is discussed in NR-based V2X communication.

Prior art can be found in WO 2018/082571 A1 which generally relates to methods and apparatus for transmission scheduling in a wireless communication system.

### SUMMARY OF THE DISCLOSURE

### Technical Solutions

According to an embodiment, a method of operating a first apparatus 100 in a wireless communication system is proposed. The method may include: determining priority related to a sidelink, SL, transmission; receiving information related to an SL threshold related to an uplink, UL, transmission from a base station 300; and performing one of the SL transmission or the UL transmission, based on the priority related to the SL transmission and the SL threshold.

### EFFECTS OF THE DISCLOSURE

The user equipment (UE) may efficiently perform SL communication.

### BRIEF DESCRIPTION OF THE DRAWINGS

FIG. 1 is a drawing for describing V2X communication based on NR, compared to V2X communication based on RAT used before NR.
FIG. 2 shows a structure of an NR system, in accordance with an embodiment of the present disclosure.
FIG. 3 shows a functional division between an NG-RAN and a 5GC, in accordance with an embodiment of the present disclosure.
FIG. 4 shows a radio protocol architecture, in accordance with an embodiment of the present disclosure.
FIG. 5 shows a structure of an NR system, in accordance with an embodiment of the present disclosure.
FIG. 6 shows a structure of a slot of an NR frame, in accordance with an embodiment of the present disclosure.
FIG. 7 shows an example of a BWP, in accordance with an embodiment of the present disclosure.
FIG. 8 shows a radio protocol architecture for a SL communication, in accordance with an embodiment of the present disclosure.
FIG. 9 shows a UE performing V2X or SL communication, in accordance with an embodiment of the present disclosure.
FIG. 10 shows a procedure of performing V2X or SL communication by a UE based on a transmission mode, in accordance with an embodiment of the present disclosure.
FIG. 11 shows three cast types, in accordance with an embodiment of the present disclosure.
FIG. 12 shows a procedure for determining whether to perform SL transmission, according to an embodiment of the present disclosure.
FIG. 13 shows a procedure for a UE to determine whether to transmit an SL signal, according to an embodiment of the present disclosure.
FIG. 14 shows a procedure for a first apparatus to perform any one of UL transmission, according to an embodiment of the present disclosure.
FIG. 15 shows a procedure for a base station to receive UL transmission, according to an embodiment of the present disclosure.
FIG. 16 shows a communication system 1, in accordance with an embodiment of the present disclosure.
FIG. 17 shows wireless devices, in accordance with an embodiment of the present disclosure.
FIG. 18 shows a signal process circuit for a transmission signal, in accordance with an embodiment of the present disclosure.
FIG. 19 shows a wireless device, in accordance with an embodiment of the present disclosure.
FIG. 20 shows a hand-held device, in accordance with an embodiment of the present disclosure.
FIG. 21 shows a car or an autonomous vehicle, in accordance with an embodiment of the present disclosure.

### DESCRIPTION OF EXEMPLARY EMBODIMENTS

In the present specification, "A or B" may mean "only A", "only B" or "both A and B." In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDDCH" may be proposed as an example of the "control information". In addition, when indicated as "control information (i.e., PDCCH)", it may also mean that "PDCCH" is proposed as an example of the "control information".

A technical feature described individually in one figure in the present specification may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5G NR. However, technical features according to an embodiment of the present disclosure will not be limited only to this.

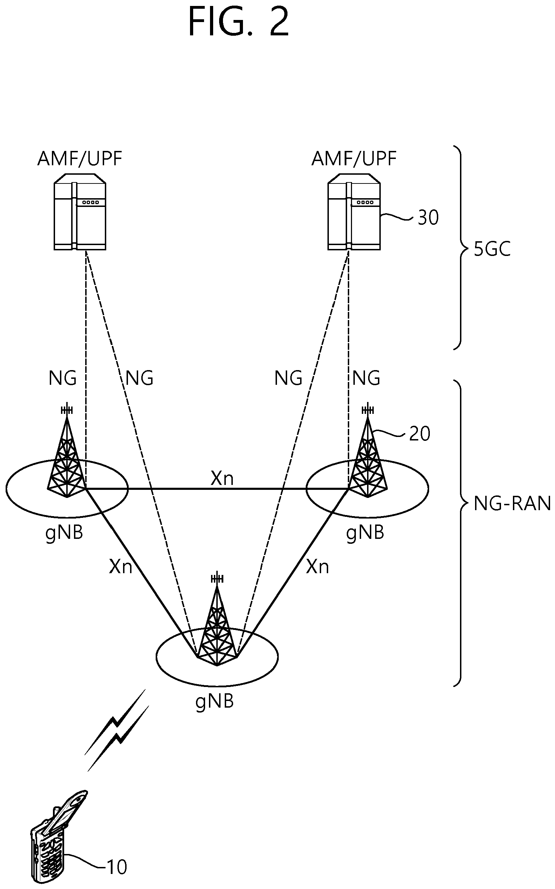

FIG. 2 shows a structure of an NR system, in accordance with an embodiment of the present disclosure. The embodiment of FIG. 2 may be combined with various embodiments of the present disclosure.

Referring to FIG. 2, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

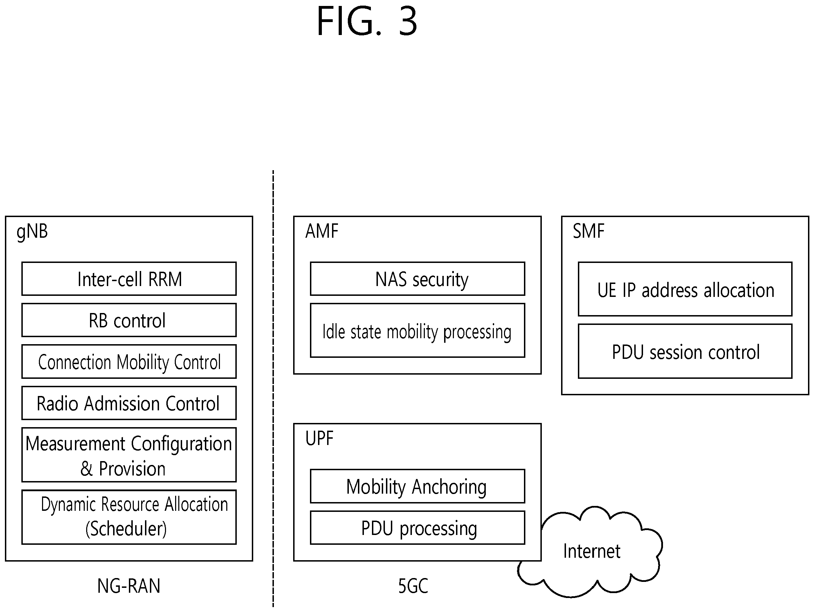

FIG. 3 shows a functional division between an NG-RAN and a 5GC, in accordance with an embodiment of the present disclosure.

Referring to FIG. 3, the gNB may provide functions, such as Inter Cell Radio Resource Management (RRM), Radio Bearer (RB) control, Connection Mobility Control, Radio Admission Control, Measurement Configuration & Provision, Dynamic Resource Allocation, and so on. An AMF may provide functions, such as Non Access Stratum (NAS) security, idle state mobility processing, and so on. AUPF may provide functions, such as Mobility Anchoring, Protocol Data Unit (PDU) processing, and so on. A Session Management Function (SMF) may provide functions, such as user equipment (UE) Internet Protocol (IP) address allocation, PDU session control, and so on.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

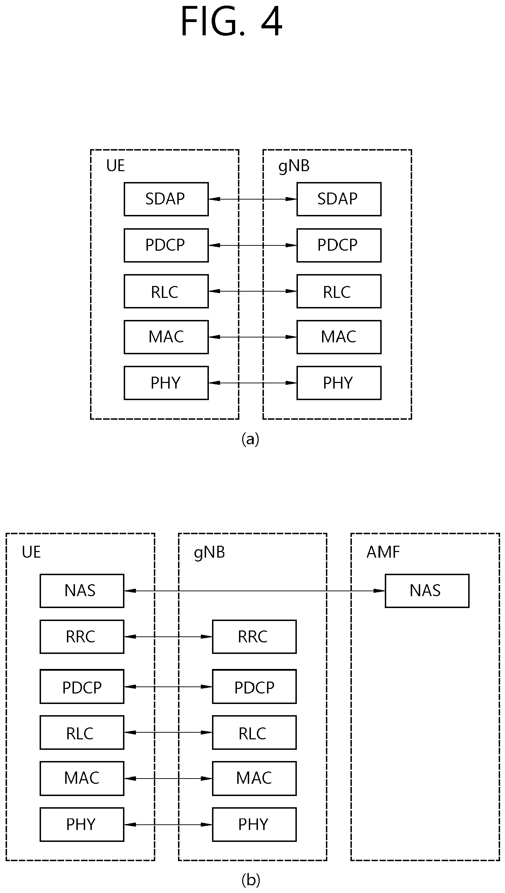

FIG. 4 shows a radio protocol architecture, in accordance with an embodiment of the present disclosure. The embodiment of FIG. 4 may be combined with various embodiments of the present disclosure. Specifically, FIG. 4(a) shows a radio protocol architecture for a user plane, and FIG. 4(b) shows a radio protocol architecture for a control plane. The user plane corresponds to a protocol stack for user data transmission, and the control plane corresponds to a protocol stack for control signal transmission.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., the MAC layer, the RLC layer, and the packet data convergence protocol (PDCP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

The physical channel includes several OFDM symbols in a time domain and several sub-carriers in a frequency domain. One sub-frame includes a plurality of OFDM symbols in the time domain. A resource block is a unit of resource allocation, and consists of a plurality of OFDM symbols and a plurality of sub-carriers. Further, each subframe may use specific sub-carriers of specific OFDM symbols (e.g., a first OFDM symbol) of a corresponding subframe for a physical downlink control channel (PDCCH), i.e., an L1/L2 control channel. A transmission time interval (TTI) is a unit time of subframe transmission.

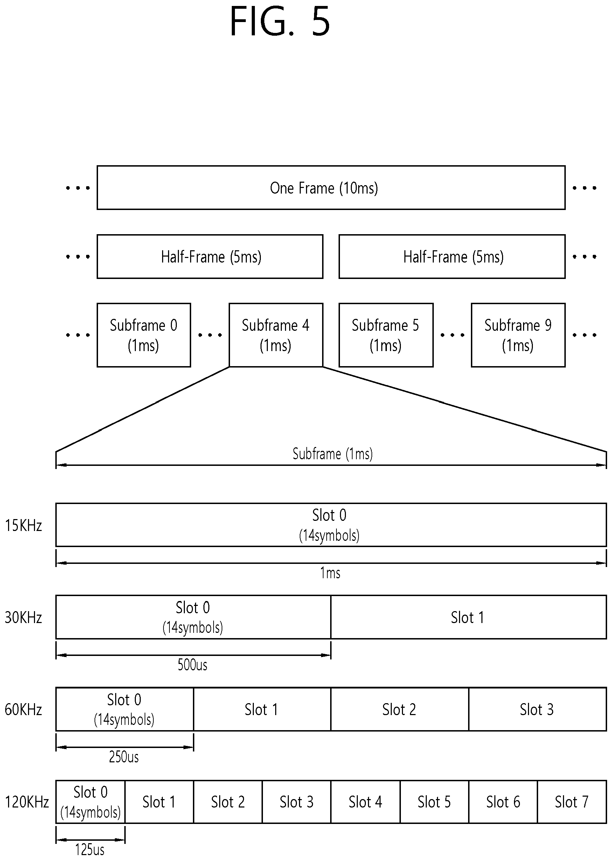

FIG. 5 shows a structure of an NR system, in accordance with an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A sub frame (SF) may be divided into one or more slots, and the number of slots within a subframe may be determined in accordance with subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) in accordance with an SCS configuration (u), in a case where a normal CP is used.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe in accordance with the SCS, in a case where an extended CP is used.

**Table 2**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

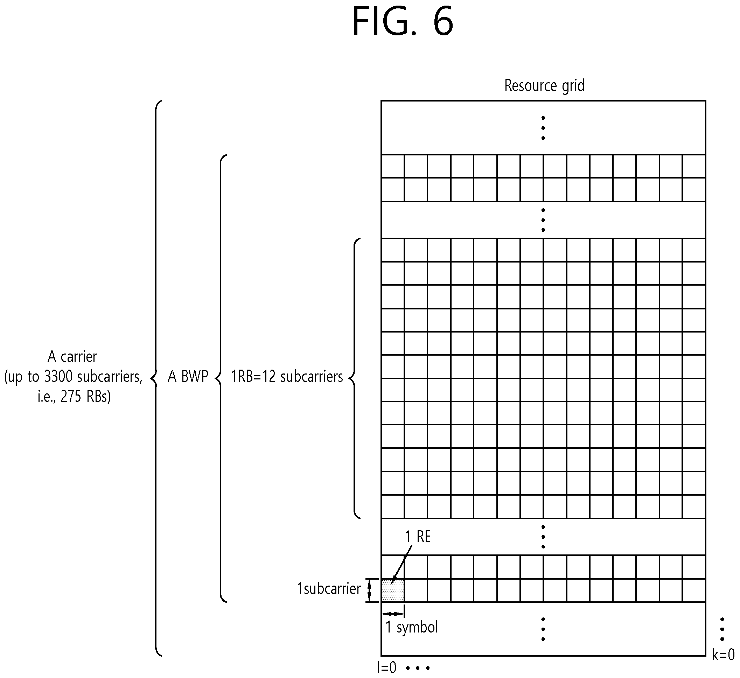

FIG. 6 shows a structure of a slot of an NR frame, in accordance with an embodiment of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Meanwhile, a radio interface between a UE and another UE or a radio interface between the UE and a network may consist of an L1 layer, an L2 layer, and an L3 layer. In various embodiments of the present disclosure, the L1 layer may imply a physical layer. In addition, for example, the L2 layer may imply at least one of a MAC layer, an RLC layer, a PDCP layer, and an SDAP layer. In addition, for example, the L3 layer may imply an RRC layer.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier.

When using bandwidth adaptation (BA), a reception bandwidth and transmission bandwidth of a UE are not necessarily as large as a bandwidth of a cell, and the reception bandwidth and transmission bandwidth of the BS may be adjusted. For example, a network/BS may inform the UE of bandwidth adjustment. For example, the UE receive information/configuration for bandwidth adjustment from the network/BS. In this case, the UE may perform bandwidth adjustment based on the received information/configuration. For example, the bandwidth adjustment may include an increase/decrease of the bandwidth, a position change of the bandwidth, or a change in subcarrier spacing of the bandwidth.

For example, the bandwidth may be decreased during a period in which activity is low to save power. For example, the position of the bandwidth may move in a frequency domain. For example, the position of the bandwidth may move in the frequency domain to increase scheduling flexibility. For example, the subcarrier spacing of the bandwidth may be changed. For example, the subcarrier spacing of the bandwidth may be changed to allow a different service. A subset of a total cell bandwidth of a cell may be called a bandwidth part (BWP). The BA may be performed when the BS/network configures the BWP to the UE and the BS/network informs the UE of the BWP currently in an active state among the configured BWPs.

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, PDSCH, or CSI-RS (excluding RRM) outside the active DL BWP. For example, the UE may not trigger a channel state information (CSI) report for the inactive DL BWP. For example, the UE may not transmit PUCCH or PUSCH outside an active UL BWP. For example, in a downlink case, the initial BWP may be given as a consecutive RB set for an RMSI CORESET (configured by PBCH). For example, in an uplink case, the initial BWP may be given by SIB for a random access procedure. For example, the default BWP may be configured by a higher layer. For example, an initial value of the default BWP may be an initial DL BWP. For energy saving, if the UE fails to detect DCI during a specific period, the UE may switch the active BWP of the UE to the default BWP.

Meanwhile, the BWP may be defined for SL. The same SL BWP may be used in transmission and reception. For example, a transmitting UE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

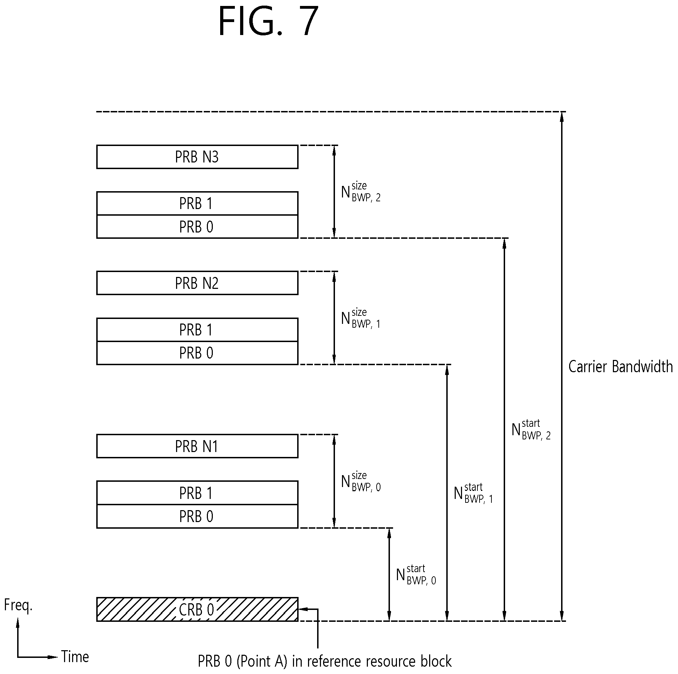

FIG. 7 shows an example of a BWP, in accordance with an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

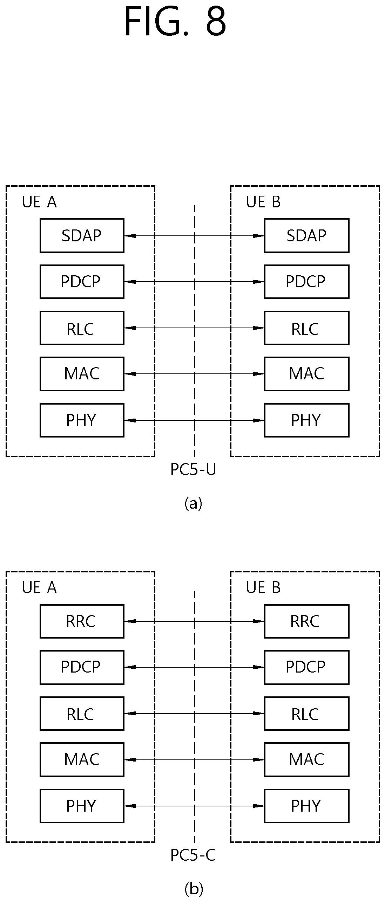

FIG. 8 shows a radio protocol architecture for a SL communication, in accordance with an embodiment of the present disclosure. The embodiment of FIG. 8 may be combined with various embodiments of the present disclosure. More specifically, FIG. 8(a) shows a user plane protocol stack, and FIG. 8(b) shows a control plane protocol stack.

Hereinafter, a sidelink synchronization signal (SLSS) and synchronization information will be described.

The SLSS may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit CRC.

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

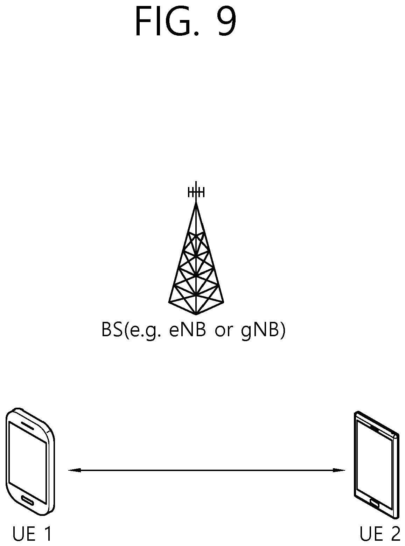

FIG. 9 shows a UE performing V2X or SL communication, in accordance with an embodiment of the present disclosure. The embodiment of FIG. 9 may be combined with various embodiments of the present disclosure.

Referring to FIG. 9, in V2X or SL communication, the term 'UE' may generally imply a UE of a user. However, if a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Hereinafter, resource allocation in SL will be described.

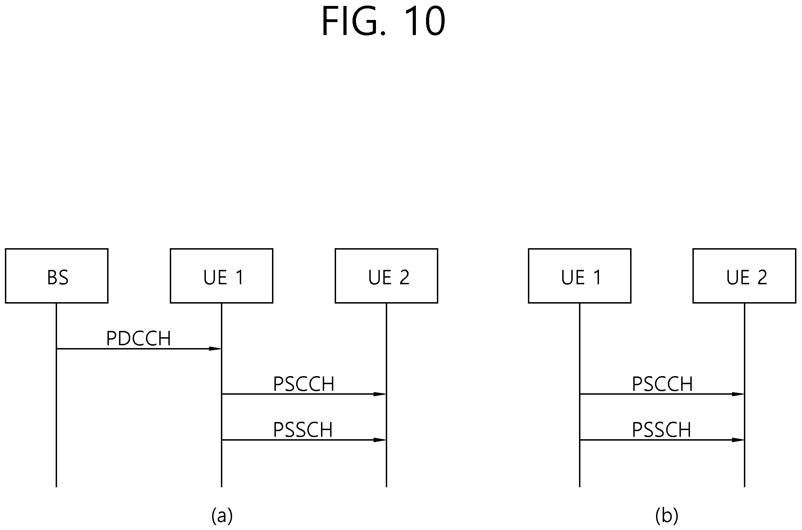

FIG. 10 shows a procedure of performing V2X or SL communication by a UE based on a transmission mode, in accordance with an embodiment of the present disclosure. The embodiment of FIG. 10 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, FIG. 10(a) shows a UE operation related to an LTE transmission mode 1 or an LTE transmission mode 3. Alternatively, for example, FIG. 10(a) shows a UE operation related to an NR resource allocation mode 1. For example, the LTE transmission mode 1 may be applied to general SL communication, and the LTE transmission mode 3 may be applied to V2X communication.

For example, FIG. 10(b) shows a UE operation related to an LTE transmission mode 2 or an LTE transmission mode 4. Alternatively, for example, FIG. 10(b) shows a UE operation related to an NR resource allocation mode 2.

Referring to FIG. 10(a), in the LTE transmission mode 1, the LTE transmission mode 3, or the NR resource allocation mode 1, a BS may schedule an SL resource to be used by the UE for SL transmission. For example, the BS may perform resource scheduling to a UE 1 through a PDCCH (more specifically, downlink control information (DCI)), and the UE 1may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to FIG. 10(b), in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the UE 2 through a PSCCH, and thereafter may transmit data based on the SCI to the UE 2 through a PSSCH.

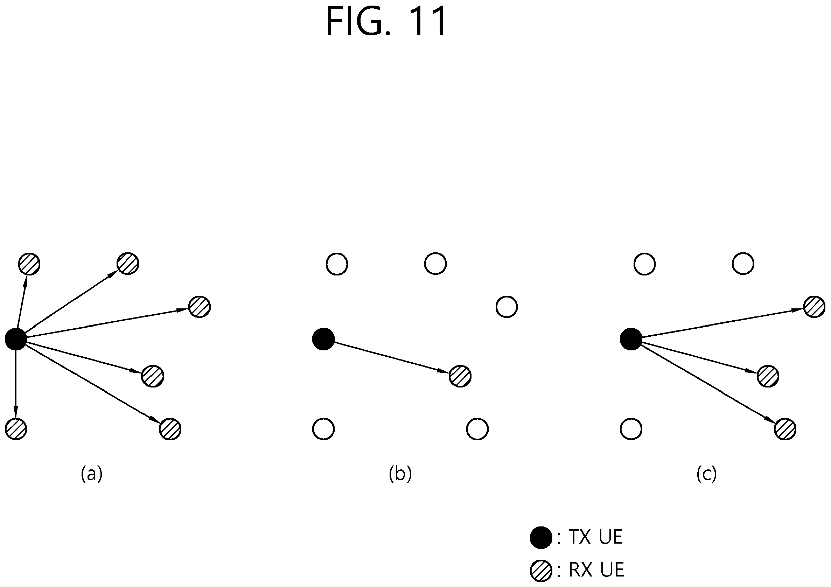

FIG. 11 shows three cast types, in accordance with an embodiment of the present disclosure. The embodiment of FIG. 11 may be combined with various embodiments of the present disclosure. Specifically, FIG. 11(a) shows broadcast-type SL communication, FIG. 11(b) shows unicast type-SL communication, and FIG. 11(c) shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Meanwhile, in a next generation system, various usage cases may be supported. For example, services for communication of self-driving vehicles, smart cars or connected cars, and so on, may be considered. For such services, each vehicle may receive and send (or transmit) information as a user equipment capable of performing communication. And, depending upon the circumstances, each vehicle may select resources for communication with the help (or assistance) of the base station or without any help (or assistance) of the base station and transmit and receive messages to and from other UEs.

On the other hand, as one of the issues in NR sidelink (SL), there is an issue related to a prioritization between uplink (UL) transmission and SL transmission on the Uu interface. The prioritization scheme may be applied between SL transmission and UL transmission in intra-RAT or between SL transmission and UL transmission in inter-RAT. For example, prioritization in inter-RAT may be applied between LTE UL transmission and NR SL transmission, or between LTE SL transmission and NR UL transmission.

For example, in LTE V2X, the following three cases have been discussed as cases to which the prioritization scheme should be applied. That is, from the perspective of one UE, when simultaneous transmission of UL transmission and SL transmission is performed on the same or shared carrier, or when simultaneous transmission of LTL transmission and SL transmission is performed on different carriers, a situation occurs in which simultaneous transmission of the UL transmission and the SL transmission cannot be performed when the UL transmission and the SL transmission overlap on the time axis, according to the first case (case 1) to the third case (case 3) of Table 5 below. For example, in the case of the first case, if the two transmissions overlap on the time axis, the UE may not be able to perform either UL transmission or SL transmission although the UL transmission and the SL transmission each have different TX chains and power budgets. Likewise, in the case of the second case, even if UL transmission and SL transmission have different TX chains and share power, if the two transmissions overlap on the time axis, the UE may not be able to perform either the UL transmission or the SL transmission. In case 3, when UL transmission and SL transmission share both the TX chain and power, there may be an issue related to determining which one of the two transmissions to drop or how to perform power allocation of the two transmissions in cases that the two transmissions overlap in the time axis.

Table 5 shows an example in which UL transmission and SL transmission are simultaneously performed.

**[Table 5]**

| |
|---|
| 1) From RAN1 viewpoint, the following three cases can be supported regarding the capability of LTE V2X devices on the simultaneous transmission of UL and SL. |
| 1.1) Case 1: UL TX and SL TX use separate TX chains and separate power budget |
| 1.2) Case 2: UL TX and SL TX use separate TX chains but sharing power budget |
| 1.3) Case 3: UL TX and SL TX share TX chains and power budget |
| 1.4) It is noted that the most suitable case may be dependent of the V2X use case. |
| 2) RAN WGs to identify solution(s) that takes into account the minimum performance of SL TX at least for some important SL TX. RAN WGs needs to reduce possible degradation of Uu operation performance in identifying such solution(s). |
| 3) For case 1, RAN1 assumes no physical layer solution is needed. |

With respect to the issue raised in LTE V2X, LTE V2X MAC procedure was specified as shown in Table 6 below in terms of procedure. Details included in Table 6 may be referred to in 3GPP TS 36.213.

**[Table 6]**

| |
|---|
| The transmission of the MAC PDU for V2X sidelink communication is prioritized over uplink transmissions if the following conditions are met: |
| 1) if the MAC entity is not able to perform all uplink transmissions and all transmissions of V2X sidelink communication simultaneously at the time of the transmission; |
| and |
| 2) if uplink transmission is not prioritized by upper layer according to TS 24.386 [15]; and |
| 3) if the value of the highest priority of the sidelink logical channel(s) in the MAC PDU is lower than *thresSL-TxPrioritization* if *thresSL-TxPrioritization* is configured. |

Briefly describing the operation in Table 6, when the above three conditions are satisfied, V2X SL transmission is prioritized over UL transmission. The above three conditions may include a condition that a MAC layer cannot transmit all UL transmissions and all SL transmissions at the same time, and a condition that UL transmission is not prioritized by higher layer designation, and a condition that a value related to the highest priority of an SL logical channel (LCH) is smaller than a pre-configured SL threshold. For example, the SL threshold may include thresSL-TxPrioritization. For example, when comparing two values related to priority, a numerically small value of one side may mean that the actual priority of the item related to the numerically small value is relatively higher than the priority of the item related to the other value. For example, a case that all UL transmissions and all SL transmissions cannot be transmitted simultaneously at the same timing may include the first to third cases in Table 5 above. Alternatively, a case that all UL transmissions and all SL transmissions cannot be transmitted simultaneously at the same timing may be included in a scenario related to Table 6. For example, referring to document TS 36.321 of 3GPP, the thresSL-TxPrioritization may represent a threshold value used to determine whether the V2X SL transmission has priority over the UL transmission when V2X SL transmission and UL transmission overlap on the time axis. In addition, referring to document TS 36.331 of 3GPP, thresSL-TxPrioritization may be overwritten with thresSL-TxPrioritization configured in the V2X SL pre-configuration.

On the other hand, even in NR V2X, it is necessary to regulate the prioritization of UL transmission and SL transmission according to the collision that occurs as described above. For example, a collision may include a case where two transmissions overlap in the time axis. In the present disclosure, a method for prioritization according to collision between UL transmission and SL transmission on intra-RAT or inter-RAT related to NR sidelink is proposed. First, a scenario to which the prioritization method proposed below can be applied will be exemplified.

### 1. Inter RAT UL/SL collision scenario

A. Collision between LTE UL transmission and NR SL transmission: For example, a case that LTE UL transmission of MCG or SCG and NR SL transmission overlap in the transmission time axis of a UE from the transmission point of view of the UE.
B. Collision between NR UL transmission and LTE SL transmission: For example, a case that NR UL transmission of MCG or SCG and LTE SL transmission overlap in the transmission time axis of a UE from the transmission point of view of the UE.

### 2. Intra RAT UL/SL collision scenario

A. Collision between NR UL transmission and NR SL transmission: For example, a case that NR UL transmission and NR SL transmission of MCG or SCG overlap in the transmission time axis of a UE from the transmission point of view of the UE.

Hereinafter, in the above scenario, it is proposed whether a UE prioritizes or drops SL transmission over UL transmission based on a pre-configured threshold. Here, the UL transmission may be performed based on a PUCCH resource or a PUSCH resource pre-configured to the UE. For example, the UL transmission may include a PUCCH or a PUSCH transmitted through a PUCCH resource or a PUSCH resource pre-configured to the UE.

According to an embodiment of the present disclosure, in NR, since information related to priority is not always linked to PUCCH resources, when UL transmission is PUCCH transmission, like the principle of LTE in UL/SL prioritization, when a value related to the highest priority of SL LCH related to SL transmission is smaller than a pre-configured SL threshold, a scheme of prioritizing SL transmission over UL transmission may be applied. For example, the SL threshold may include thresSL-TxPrioritization. For example, a cases that the value related to the highest priority of the SL LCH related to the SL transmission is smaller than the pre-configured SL threshold may include a case that the priority of the SL LCH related to SL transmission is higher than the priority related to the threshold, or a case that the priority of the SL LCH is higher than the priority corresponding to the pre-configured SL threshold. Here, what is proposed here is that an SL threshold value for comparing the priority with SL transmission may be different depending on what kind of content UL transmission having a collision includes.

For example, PUCCH may be used to transmit information related to at least one of a scheduling request (SR), HARQ ACK/NACK related to PDSCH transmission, and/or channel status information (CSI). In general, HARQ ACK/NACK and SR may have a relatively higher priority than CSI, because the HARQ ACK/NACK and the SR are information related to success or failure of the initial transmission, or resource scheduling requests for urgently needed data, whereas CSI is used for the purpose of adapting the state of a link by reporting the channel state. Accordingly, a base station may configure the SL threshold differently according to the content to be transmitted through the PUCCH in advance. For example, the SL threshold may include a thresSL-TxPrioritization value.

For example, a first SL threshold (for example, thresSL-TxPrioritization1), to be applied to prioritization between PUCCH related to HARQ ACK/NACK and/or SR and SL transmission, may be configured relatively smaller than a second SL threshold (for example, thresSL-Txprioritization2), to be applied to prioritization between PUCCH related to CSI transmission and SL transmission.

For example, when PSFCH transmission and UL transmission collide, in terms of priority between the PSFCH transmission and the UL transmission, the priority of the PSFCH transmission may be the same as the highest priority among PSCCH/PSSCH related to the PSFCH. For example, when the UL transmission is not related to the SL HARQ report, if the UL transmission is configured to high priority from a higher layer, or if the UL transmission is UL transmission related to DCI indicating 'high' in a priority field, where the last two options correspond to the claimed embodiment, and an SL threshold related to URLLC is configured, the UE may perform either the UL transmission or the PSFCH transmission based on the SL threshold and the priority of SL transmission. Here, if an SL threshold related to URLLC is not configured, the UE may prioritize the UL transmission over the PSFCH transmission. For example, if the priority value related to the SL transmission is smaller than the SL threshold, the UE may prioritize the SL transmission over the UL transmission, if the priority value is greater than the SL threshold, the UE may prioritize the UL transmission over the SL transmission. For example, when UL transmission is not related to an SL HARQ report, if the UL transmission is configured to high priority from a higher layer or the UL transmission is not UL transmission related to DCI indicating 'high' in a priority field, the UE may perform prioritization based on an SL threshold that is not related to URLLC. Additionally, for example, a UE may always prioritize PRACH and PUSCH scheduled by the RAR UL grant.

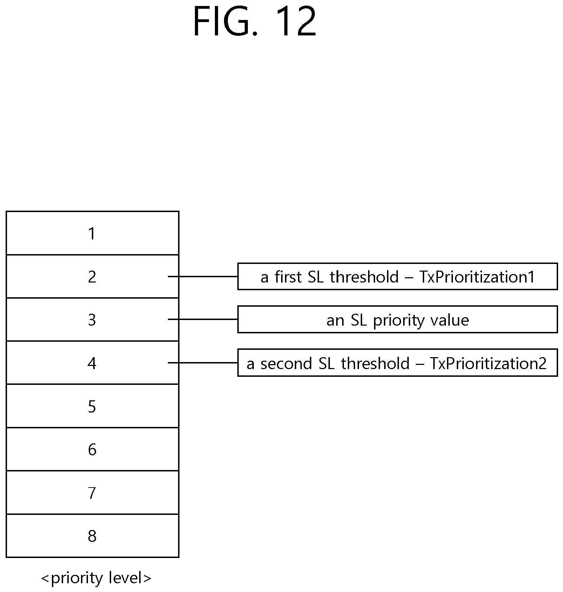

FIG. 12 shows a procedure for determining whether to perform SL transmission, according to an embodiment of the present disclosure. The embodiment of FIG. 12 may be combined with various embodiments of the present disclosure.

Referring to FIG. 12, an SL priority value may be 3. For example, the SL priority value may represent a value related to a priority included in an LCH related to SL transmission. For example, a first SL threshold (e.g., thresSL-TxPrioritization1) and a second SL threshold (e.g., thresSL-TxPrioritization2) may be 2 and 4, respectively. Here, the UE may perform prioritization related to the SL transmission and the UL transmission based on two differently configured SL thresholds. For example, if a collision between PUCCH transmission and SL transmission related to HARQ ACK/NACK and/or SR occurs, the UE may compare the first SL threshold value with an SL priority value, and give priority to UL PUCCH transmission because the SL transmission has a lower priority. At this time, for example, the UE may drop the SL transmission. Conversely, if, for example, a collision between PUCCH and SL transmission of low priority related to CSI occurs, since the SL priority value is smaller than the second SL threshold, the UE may drop the UL PUCCH transmission.

In the above, it was assumed that priority of PUCCH related to HARQ ACK/NACK and SR is higher than that of PUCCH related to CSI, the priority relationship between these PUCCHs may be defined in advance and reflected in an SL threshold signaled by a base station. For example, the SL threshold may include thresSL-TxPrioritization. For example, a base station may configure an SL threshold related to URLLC transmission to be smaller in order to perform urgent URLLC transmission and to protect HARQ ACK/NACK related therewith. For example, this threshold configuration may be signaled periodically and changed.

According to an embodiment of the present disclosure, when an LCH priority value related to PUCCH exists, a UE may determine whether to drop SL transmission by comparing the priorities between UL transmission and the SL transmission. For example, in the case of an SR of an NR, priority of the SR may be that of an LCH related to the SR. For example, in cast of the SR, by directly comparing priority of the LCH related to the PUCCH and priority of SL LCH, transmission related to the LCH having a higher priority may be prioritized. That is, for example, transmission related to an LCH having a lower priority as a result of comparison may be dropped.

According to an embodiment of the present disclosure, a UE may determine which transmission is to be prioritized in a UL/SL collision scenario, thereby preventing a phenomenon in which transmission of all data fails in the collision scenario.

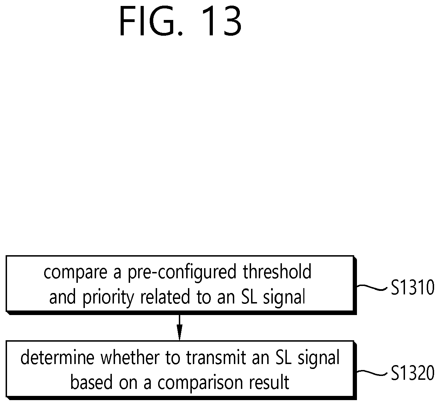

FIG. 13 shows a procedure for a UE to determine whether to transmit an SL signal, according to an embodiment of the present disclosure. The embodiment of FIG. 13 may be combined with various embodiments of the present disclosure.

Referring to FIG. 13, for example, a UE may include at least one of VRU, V2X, and/or RSU. FIG. 13 is a flowchart for explaining a method for a UE to determine whether to drop transmission of a UL signal and transmit an SL signal with priority, in case that the SL signal to be transmitted from the UE and the UL signal to be transmitted from the UE overlap in the time domain.

Referring to FIG. 13, when transmission of a UL signal and transmission of an SL signal overlap each other in time domain, in step S 1310, a UE may compare a pre-configured threshold value with a priority related to the SL signal. Here, priority related to the SL signal may be the highest priority among LCH priorities configured for the SL signal or LCH priorities configured for the SL signal. Also, here, the pre-configured threshold value may be configured differently based on content related to the UL signal. For example, a threshold value configured when the UL signal is a signal related to HARQ ACK/NACK and SR may be configured to a value smaller than a threshold value configured when the UL signal is a signal related to CSI.

In step S 1320, the UE may determine whether to transmit the SL signal with priority over the UL signal, based on the comparison result between the pre-configured threshold value corresponding to the content related to the UL signal and the priority related to the SL signal. Specifically, when the priority value related to the SL signal has a value smaller than the pre-configured threshold value (that is, when the priority of the SL signal takes precedence over the priority corresponding to the pre-configured threshold value), the UE may drop the UL signal and transmit the SL signal with priority. On the other hand, when the priority value related to the SL signal has a value greater than the pre-configured threshold value (that is, when the priority corresponding to the pre-configured threshold value has priority over the priority of the SL signal), the UE may drop the SL signal and transmit the UL signal.

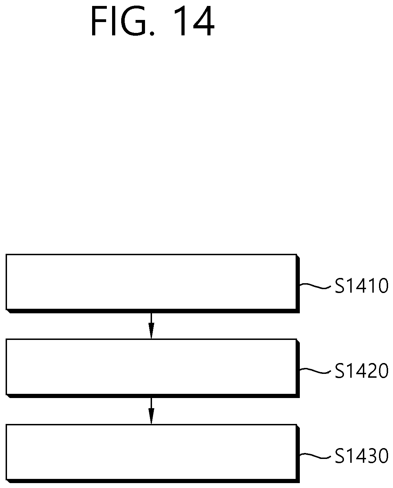

FIG. 14 shows a procedure for a first apparatus to perform any one of UL transmission, according to an embodiment of the present disclosure. The embodiment of FIG. 14 may be combined with various embodiments of the present disclosure.

Referring to FIG. 14, in step S 14 10, a first apparatus determines priority related to a sidelink, SL, transmission. In step S1420, the first apparatus may receive information related to an SL threshold related to an uplink, UL, transmission from a base station. In step S1430, the first apparatus performs one of the SL transmission or the UL transmission, based on the priority related to the SL transmission and the SL threshold. For example, the SL transmission and the UL transmission may overlap in time domain, and the SL threshold may be configured to the first apparatus based on priority related to the UL transmission.

For example, the priority related to the SL transmission may be determined based on a first logical channel, LCH, related to the SL transmission.

For example, a transmission which is not performed among the SL transmission or the UL transmission may be dropped.

For example, based on the priority related to the SL transmission which has a greater value than the SL threshold, the UL transmission may be performed among the SL transmission or the UL transmission.

For example, the priority related to the UL transmission may include priority related to a packet which is transmitted through the UL transmission.

For example, the packet which is transmitted through the UL transmission may include information related to at least one of physical uplink control channel, PUCCH, a scheduling request, SR, a hybrid automatic repeat request, HARQ, feedback, and/or channel state information, CSI.

For example, priority related to the packet which is transmitted through the UL transmission may be configured by a base station.

For example, the priority related to the packet which is transmitted through the UL transmission may be 'high'.

For example, the priority related to the packet which is transmitted through the UL transmission may be changed periodically.

For example, the priority related to the UL transmission may be received from a base station.

For example, the priority related to the UL transmission may be received through downlink control information, DCI, from the base station.

For example, the priority related to the UL transmission may be received through a radio resource control, RRC, message from the base station.

For example, the priority related to the SL transmission may be included in a first LCH related to the SL transmission, the priority related to the UL transmission may be included in a second LCH related to the UL transmission, and the transmission which is performed may be performed as one among the SL transmission and the UL transmission based on the priority related to the SL transmission and the priority related to the UL transmission.

The above-described embodiment may be applied to various devices to be described below. For example, a processor 102 of a first apparatus 100 may determine priority related to a sidelink, SL, transmission. And, the processor 102 of the first apparatus 100 may control a transceiver 106 to receive information related to an SL threshold related to an uplink, UL, transmission from a base station 300. And, the processor 102 of the first apparatus 100 may control the transceiver 106 to perform one of the SL transmission or the UL transmission, based on the priority related to the SL transmission and the SL threshold. For example, the SL transmission and the UL transmission may overlap in time domain, and the SL threshold may be configured to the first apparatus based on priority related to the UL transmission.

According to an embodiment of the present disclosure, a first apparatus for performing wireless communication may be supported. For example, the first apparatus may comprise: one or more memories storing instructions; one or more transceivers; and one or more processors connected to the one or more memories and the one or more transceivers. For example, the one or more processors may execute the instructions to: determine priority related to a sidelink, SL, transmission; receive information related to an SL threshold related to an uplink, UL, transmission from a base station; and perform one of the SL transmission or the UL transmission, based on the priority related to the SL transmission and the SL threshold, wherein the SL transmission and the UL transmission overlap in time domain, and wherein the SL threshold is configured to the first apparatus based on priority related to the UL transmission.

According to an embodiment of the present disclosure, an apparatus configured to control a first user equipment, UE, may be proposed. For example, the apparatus may comprise: one or more processors; and one or more memories operably connectable to the one or more processors and storing instructions. For example, the one or more processors may execute the instructions to: determine priority related to a sidelink, SL, transmission; receive information related to an SL threshold related to an uplink, UL, transmission from a base station; and perform one of the SL transmission or the UL transmission, based on the priority related to the SL transmission and the SL threshold, wherein the SL transmission and the UL transmission overlap in time domain, and wherein the SL threshold is configured to the first apparatus based on priority related to the UL transmission.

According to an embodiment of the present disclosure, a non-transitory computer-readable storage medium storing instructions may be supported. For example, the instructions, when executed, may cause a first user equipment, UE, to: determine priority related to a sidelink, SL, transmission; receive information related to an SL threshold related to an uplink, UL, transmission from a base station; and perform one of the SL transmission or the UL transmission, based on the priority related to the SL transmission and the SL threshold, wherein the SL transmission and the UL transmission overlap in time domain, and wherein the SL threshold is configured to the first apparatus based on priority related to the UL transmission.

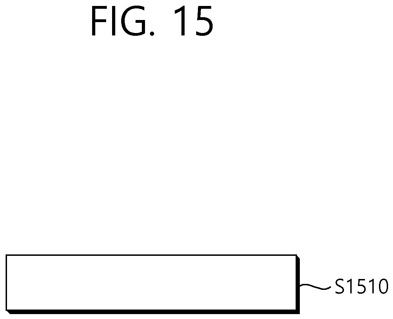

FIG. 15 shows a procedure for a base station to receive UL transmission, according to an embodiment of the present disclosure. The embodiment of FIG. 15 may be combined with various embodiments of the present disclosure.

Referring to FIG. 15, in step S1510, a base station may transmit information related to a sidelink, SL, threshold related to an uplink, UL, transmission, based on priority related to an UL transmission to a first apparatus. In step S1520, the base station may receive an UL transmission from the first apparatus. For example, the UL transmission may be performed by the first apparatus based on priority related to an SL transmission and the SL threshold.

For example, the priority related to the UL transmission may include priority related to a packet which is transmitted through the UL transmission.

The above-described embodiment may be applied to various devices to be described below. For example, a processor 202 of a base station 200 may control a transceiver 206 to transmit information related to a sidelink, SL, threshold related to an uplink, UL, transmission, based on priority related to an UL transmission to a first apparatus 100. And, the processor 202 of the base station 200 may control the transceiver 206 to receive an UL transmission from the first apparatus 100. For example, the UL transmission may be performed by the first apparatus based on priority related to an SL transmission and the SL threshold.

According to an embodiment of the present disclosure, a base station for performing wireless communication may be supported. For example, the base station may comprise: one or more memories storing instructions; one or more transceivers; and one or more processors connected to the one or more memories and the one or more transceivers, wherein the one or more processors execute the instructions to: transmit information related to a sidelink, SL, threshold related to an uplink, UL, transmission, based on priority related to an UL transmission to a first apparatus; and receive an UL transmission from the first apparatus, wherein the UL transmission is performed by the first apparatus based on priority related to an SL transmission and the SL threshold.

For example, the priority related to the UL transmission may include priority related to a packet which is transmitted through the UL transmission.

Hereinafter, an apparatus to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

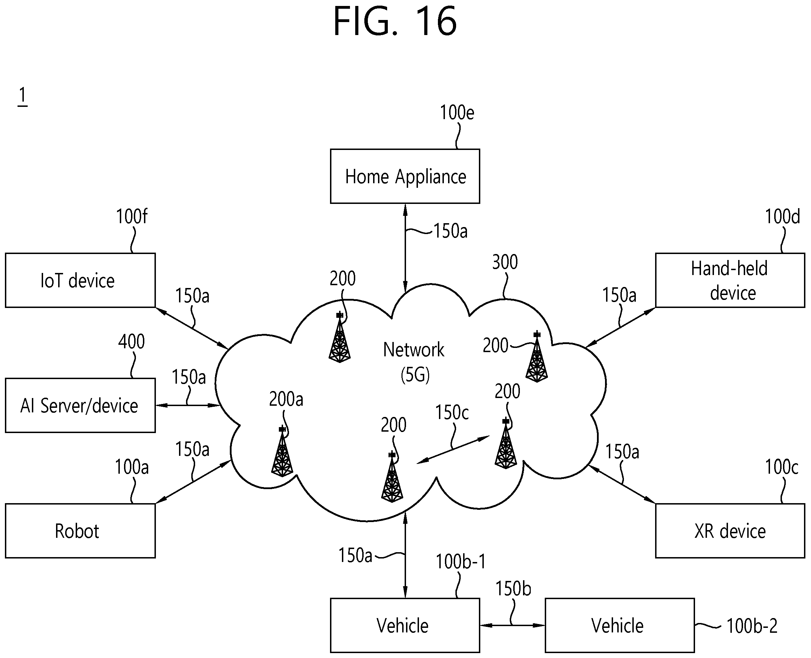

FIG. 16 shows a communication system 1, in accordance with an embodiment of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

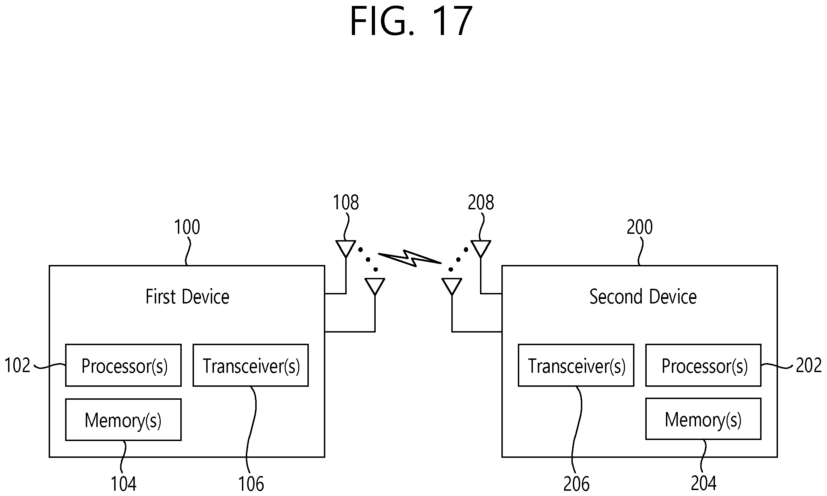

FIG. 17 shows wireless devices, in accordance with an embodiment of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

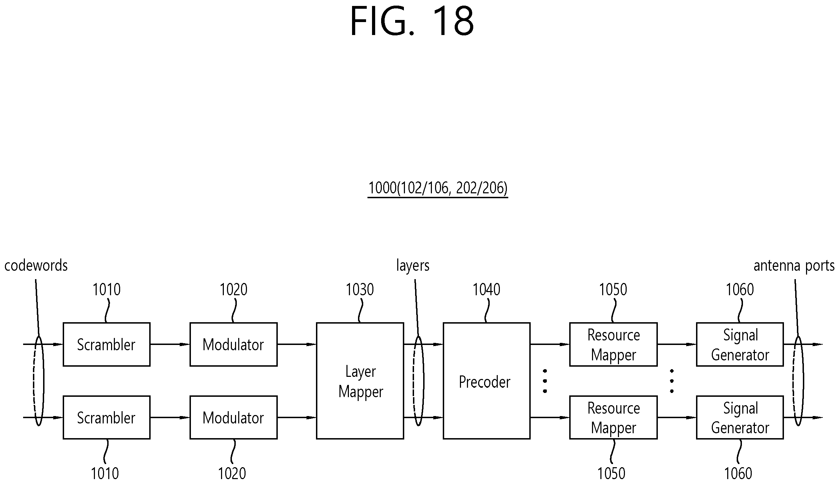

FIG. 18 shows a signal process circuit for a transmission signal, in accordance with an embodiment of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

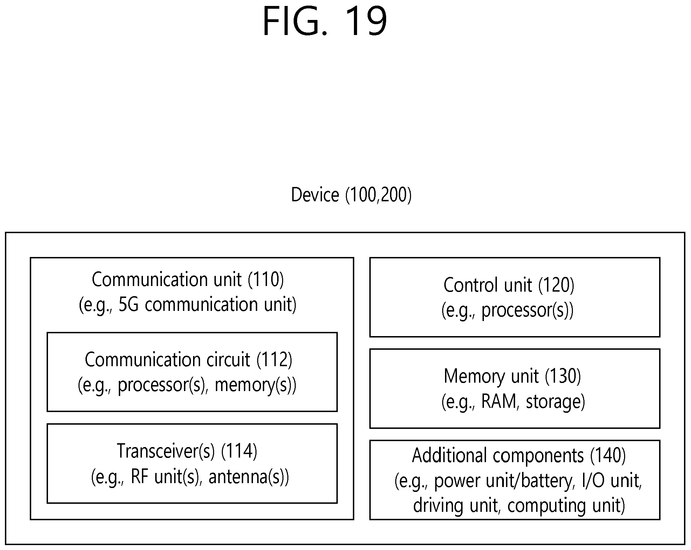

FIG. 19 shows another example of a wireless device, in accordance with an embodiment of the present disclosure. The wireless device may be implemented in various forms according to a use-case/service (refer to FIG. 16).

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

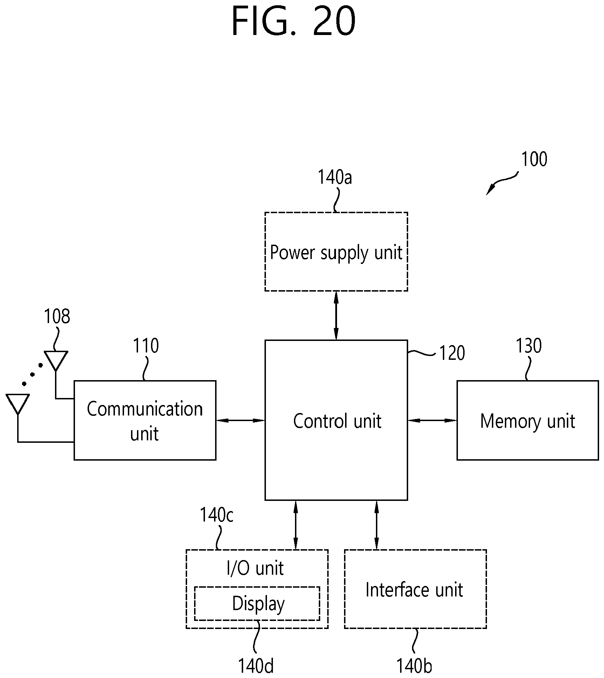

FIG. 20 shows a hand-held device, in accordance with an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

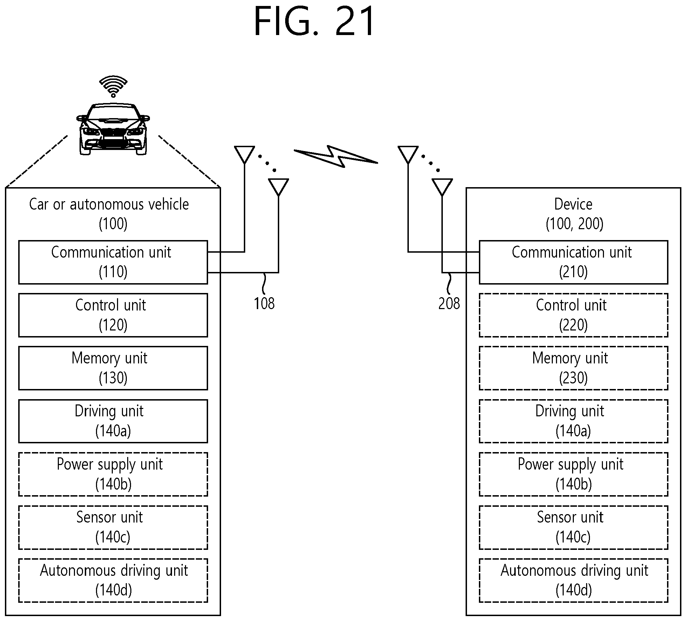

FIG. 21 shows a vehicle or an autonomous vehicle, in accordance with an embodiment of the present disclosure. The vehicle or autonomous vehicle may be implemented by a mobile robot, a car, a train, a manned/unmanned Aerial Vehicle (AV), a ship, etc.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first apparatus, wireless communication, the method comprising:
obtaining (S1410) a priority value related to a sidelink, SL, communication;
obtaining (S1420) information related to a first SL threshold for prioritization between the SL communication and an uplink, UL, transmission;
based on the UL transmission being related to a high priority:
based on a second SL threshold related to ultra reliable and low latency communication, URLLC, being configured:
performing a prioritization between the SL communication and the UL transmission related to URLLC, based on the priority value related to the SL communication and the second SL threshold; and
performing (S1430) the prioritized one of the SL communication or the UL transmission;
based on the second SL threshold being not configured, performing the UL transmission,
wherein the SL communication and the UL transmission overlap in a time domain.

2. The method of claim 1, wherein the first SL threshold and the second SL threshold are configured to the first apparatus based on a type of the UL transmission.

3. The method of claim 1, the UL transmission related to a high priority is related to URLLC.

4. The method of claim 1, wherein the priority value related to the SL communication is determined based on a first logical channel, LCH, related to the SL communication.

5. The method of claim 1, wherein an operation which is not performed among the SL communication or the UL transmission is dropped.

6. The method of claim 1, wherein based on the priority value related to the SL communication which is greater than the first SL threshold or the second SL threshold, the UL transmission is performed among the SL communication or the UL transmission.

7. The method of claim 1, wherein priority related to the UL transmission includes priority related to a packet which is transmitted through the UL transmission.

8. The method of claim 7, wherein the packet which is transmitted through the UL transmission includes information related to at least one of a physical uplink control channel, PUCCH, a scheduling request, SR, a hybrid automatic repeat request, HARQ, feedback, or channel state information, CSI.

9. The method of claim 7, wherein priority related to the packet which is transmitted through the UL transmission is configured by a base station.

10. The method of claim 9, wherein the priority related to the packet which is transmitted through the UL transmission is 'high'.

11. The method of claim 9, wherein the priority related to the packet which is transmitted through the UL transmission is changed periodically.

12. The method of claim 1, wherein a priority related to the UL transmission is received from a base station.

13. A first apparatus (100) for performing wireless communication, the first apparatus comprising:
one or more memories (104) storing instructions; and
one or more processors (102) connected to the one or more memories (104), wherein the one or more processors (102) execute the instructions to:
obtain a priority value related to a sidelink, SL, communication;
obtain information related to a first SL threshold for prioritization between the SL communication and an uplink, UL, transmission;
based on the UL transmission being related to a high priority:
based on a second SL threshold related to ultra reliable and low latency communication, URLLC, being configured:
perform a prioritization between the SL communication and the UL transmission related to URLLC, based on the priority value related to the SL communication and the second SL threshold; and
perform the prioritized one of the SL communication or the UL transmission;
based on the second SL threshold being not configured, perform the UL transmission,
wherein the SL communication and the UL transmission overlap in a time domain.

14. The first apparatus (100) of claim 13, wherein the first apparatus further comprises one or more transceivers (106) controlled by the one or more processors (102) to perform the SL communication or the UL transmission.

## Patentansprüche

1. Verfahren zum Durchführen, durch eine erste Vorrichtung, einer drahtlosen Kommunikation, wobei das Verfahren umfasst:
Erhalten (S1410) eines Prioritätswertes, der sich auf eine Sidelink-, SL-, Kommunikation bezieht;
Erhalten (S1420) von Informationen, die sich auf einen ersten SL-Schwellenwert für eine Priorisierung zwischen der SL-Kommunikation und einer Uplink-, UL-, Übertragung beziehen;
auf der Grundlage, dass sich die UL-Übertragung auf eine hohe Priorität bezieht:
auf der Grundlage, dass ein zweiter SL-Schwellenwert, der sich auf eine besonders zuverlässige Kommunikation mit geringer Latenzzeit, URLLC, bezieht, konfiguriert ist:
Durchführen einer Priorisierung zwischen der SL-Kommunikation und der UL-Übertragung, die sich auf die URLLC bezieht, basierend auf dem Prioritätswert, der sich auf die SL-Kommunikation und den zweiten SL-Schwellenwert bezieht; und
Durchführen (S1430) der priorisierten SL-Kommunikation oder UL-Übertragung;
auf der Grundlage, dass der zweite SL-Schwellenwert nicht konfiguriert ist, Durchführen der UL-Übertragung,
wobei sich die SL-Kommunikation und die UL-Übertragung in einem Zeitbereich überschneiden.

2. Verfahren nach Anspruch 1, wobei der erste SL-Schwellenwert und der zweite SL-Schwellenwert für die erste Vorrichtung auf der Grundlage eines Typs der UL-Übertragung konfiguriert sind.

3. Verfahren nach Anspruch 1, wobei sich die UL-Übertragung, die sich auf eine hohe Priorität bezieht, auf URLLC bezieht.

4. Verfahren nach Anspruch 1, wobei der Prioritätswert, der sich auf die SL-Kommunikation bezieht, auf der Grundlage eines ersten logischen Kanals, LCH, der sich auf die SL-Kommunikation bezieht, bestimmt wird.

5. Verfahren nach Anspruch 1, wobei eine Operation, die nicht zwischen der SL-Kommunikation oder der UL-Übertragung durchgeführt wird, verworfen wird.

6. Verfahren nach Anspruch 1, wobei basierend auf dem Prioritätswert, der sich auf die SL-Kommunikation bezieht und größer als der erste SL-Schwellenwert oder der zweite SL-Schwellenwert ist, die UL-Übertragung unter der SL-Kommunikation oder der UL-Übertragung durchgeführt wird.

7. Verfahren nach Anspruch 1, wobei die Priorität, die sich auf die UL-Übertragung bezieht, eine Priorität umfasst, die sich auf ein Paket bezieht, das durch die UL-Übertragung übertragen wird.

8. Verfahren nach Anspruch 7, wobei das Paket, das durch die UL-Übertragung übertragen wird, Informationen enthält, die sich auf mindestens einen physikalischen Uplink-Steuerkanal, PUCCH, eine Planungsanforderung, SR, eine hybride automatische Wiederholungsanforderungs-, HARQ-, Rückmeldung oder Kanalzustandsinformationen, CSI, beziehen.

9. Verfahren nach Anspruch 7, wobei die Priorität, die sich auf das Paket bezieht, das durch die UL-Übertragung übertragen wird, von einer Basisstation konfiguriert wird.

10. Verfahren nach Anspruch 9, wobei die Priorität, die sich auf das Paket bezieht, das durch die UL-Übertragung übertragen wird, "hoch" ist.

11. Verfahren nach Anspruch 9, wobei die Priorität, die sich auf das Paket bezieht, das durch die UL-Übertragung übertragen wird, periodisch geändert wird.

12. Verfahren nach Anspruch 1, wobei eine Priorität, die sich auf die UL-Übertragung bezieht, von einer Basisstation empfangen wird.

13. Erste Vorrichtung (100) zum Durchführen einer drahtlosen Kommunikation, wobei die erste Vorrichtung umfasst:
einen oder mehrere Speicher (104), die Befehle speichern; und
einen oder mehrere Prozessoren (102), die mit dem einen oder den mehreren Speichern (104) verbunden sind, wobei der eine oder die mehreren Prozessoren (102) die Anweisungen ausführen zum:
Erhalten eines Prioritätswertes, der sich auf eine Sidelink-, SL-, Kommunikation bezieht;
Erhalten von Informationen, die sich auf einen ersten SL-Schwellenwert für eine Priorisierung zwischen der SL-Kommunikation und einer Uplink-, UL-, Übertragung beziehen;
auf der Grundlage, dass sich die UL-Übertragung auf eine hohe Priorität bezieht:
auf der Grundlage, dass ein zweiter SL-Schwellenwert, der sich auf eine besonders zuverlässige Kommunikation mit geringer Latenzzeit, URLLC, bezieht, konfiguriert ist:
Durchführen einer Priorisierung zwischen der SL-Kommunikation und der UL-Übertragung, die sich auf die URLLC bezieht, basierend auf dem Prioritätswert, der sich auf die SL-Kommunikation und den zweiten SL-Schwellenwert bezieht; und
Durchführen der priorisierten SL-Kommunikation oder UL-Übertragung;
auf der Grundlage, dass der zweite SL-Schwellenwert nicht konfiguriert ist, Durchführen der UL-Übertragung,
wobei sich die SL-Kommunikation und die UL-Übertragung in einem Zeitbereich überschneiden.

14. Erste Vorrichtung (100) nach Anspruch 13, wobei die erste Vorrichtung ferner einen oder mehrere Transceiver (106) umfasst, die von dem einen oder den mehreren Prozessoren (102) gesteuert werden, um die SL-Kommunikation oder die UL-Übertragung durchzuführen.

## Revendications

1. Procédé pour établir, par un premier appareil, une communication sans fil, le procédé comprenant:
l'obtention (S1410) d'une valeur de priorité associée à une communication en liaison latérale, SL;
l'obtention (S1420) d'informations associées à un premier seuil SL pour établir une priorité entre la communication SL et une transmission en liaison montante, UL;
sur la base de la transmission UL qui est associée à une priorité élevée:
sur la base d'un second seuil SL associé à une communication ultra fiable et à faible latence, URLLC, qui est configuré:
l'établissement d'une priorité entre la communication SL et la transmission UL associé à URLLC, en fonction de la valeur de priorité associée à la communication SL et le second seuil SL; et
la réalisation (S1430) de l'une parmi la communication SL ou la transmission UL par ordre de priorité;
sur la base du second seuil SL qui n'est pas configuré, la réalisation de la transmission UL,
dans lequel la communication SL et la transmission UL ne se chevauchent pas dans un domaine temporel.

2. Procédé selon la revendication 1, dans lequel le premier seuil SL et le second seuil SL sont configurés dans le premier appareil en fonction d'un type de la transmission UL.

3. Procédé selon la revendication 1, dans lequel la transmission UL associée à une priorité élevée est liée à URLLC.

4. Procédé selon la revendication 1, dans lequel la valeur de priorité associée à la communication SL est déterminée sur la base d'un premier canal logique, LCH, associé à la communication SL.

5. Procédé selon la revendication 1, dans lequel une opération qui n'est pas effectuée parmi la communication SL ou la transmission UL est abandonnée.

6. Procédé selon la revendication 1, dans lequel selon que la valeur de priorité associée à la communication SL est supérieure au premier seuil SL ou au second seuil SL, la transmission UL est effectuée parmi la communication SL ou la transmission UL.

7. Procédé selon la revendication 1, dans lequel la priorité associée à la transmission UL comprend la priorité associée à un paquet qui est transmis par la transmission UL.

8. Procédé selon la revendication 7, dans lequel le paquet qui est transmis par la transmission UL comprend des informations associées à au moins l'un parmi un canal physique de commande de liaison montante, PUCCH, une demande d'ordonnancement, SR, un retour de requête automatique de répétition hybride, HARQ, ou des informations d'état de canal, CSI.

9. Procédé selon la revendication 7, dans lequel la priorité associée au paquet qui est transmis par la transmission UL est configurée par une station de base.

10. Procédé selon la revendication 9, dans lequel la priorité associée au paquet qui est transmis par la transmission UL est « élevée ».

11. Procédé selon la revendication 9, dans lequel la priorité associée au paquet qui est transmis par la transmission UL est modifiée périodiquement.

12. Procédé selon la revendication 1, dans lequel une priorité associée à la transmission UL est reçue en provenance d'une station de base.

13. Premier appareil (100) pour établir une communication sans fil, le premier appareil comprenant:
une ou plusieurs mémoires (104) stockant des instructions; et
un ou plusieurs processeurs (102) connectés à la ou aux mémoires (104), dans lequel le ou les processeurs (102) exécutent les instructions pour:
l'obtention d'une valeur de priorité associée à une communication en liaison latérale, SL;
l'obtention d'informations associées à un premier seuil SL pour établir une priorité entre la communication SL et une transmission en liaison montante, UL;
sur la base de la transmission UL qui est associée à une priorité élevée:
sur la base d'un second seuil SL associé à une communication ultra fiable et à faible latence, URLLC, qui est configuré:
pour établir une priorité entre la communication SL et la transmission UL associé à URLLC, en fonction de la valeur de priorité associée à la communication SL et le second seuil SL; et
pour réaliser l'une parmi la communication SL ou la transmission UL par ordre de priorité;
sur la base du second seuil SL qui n'est pas configuré, pour réaliser la transmission UL,
dans lequel la communication SL et la transmission UL ne se chevauchent pas dans un domaine temporel.

14. Premier appareil (100) selon la revendication 13, dans lequel le premier appareil comprend en outre un ou plusieurs émetteurs-récepteurs (106) commandés par le ou les processeurs (102) pour établir la communication SL ou effectuer la transmission UL.
